# EUROPEAN PATENT SPECIFICATION

(11) **EP 2 704 244 B1**
(45) Date of publication and mention of the grant of the patent: **16.05.2018**
(21) Application number: 13180861.0
(22) Date of filing: 19.08.2013
(51) Int. Cl.: H01M 10/052, H01M 10/0567, H01M 10/0569, H01M 4/587

(54) **Electrolyte for rechargeable lithium battery and rechargeable lithium battery including the same**
Elektrolyt für wiederaufladbare Lithiumbatterie und wiederaufladbare Lithiumbatterie damit
Électrolyte pour batterie au lithium rechargeable et batterie au lithium rechargeable le comprenant

(30) Priority: 29.08.2012 KR 20120095153
(43) Date of publication of application: 05.03.2014
(73) Proprietor: Samsung SDI Co., Ltd., Gyeonggi-do (KR)
(72) Inventor: Park, Na-Rae, Yongin-si (Gyeonggi-do) (KR); Lim, Jin-Hyunk, Yongin-si (Gyeonggi-do) (KR); Oh, Mi-Hyeun, Yongin-si (Gyeonggi-do) (KR)
(74) Representative: Santarelli

(56) References cited:
- EP-A1- 2 498 329
- EP-A2- 2 355 213
- DE-A1-102010 013 293
- JP-A- 2007 141 831
- KR-A- 20050 063 915
- US-A1- 2011 027 663
- US-B1- 6 492 064

## Description

### BACKGROUND

### Field

This disclosure relates to a non-aqueous electrolyte for a rechargeable lithium battery and a rechargeable lithium battery including the same.

### Description of the Related Art

A rechargeable lithium battery has recently drawn attention as a power source for a small portable electronic device. It uses an organic electrolyte solution and thereby, has twice or more high discharge voltage than that of a conventional battery using an alkali aqueous solution and as a result, has high energy density.

The organic electrolyte solution for a rechargeable lithium battery usually comprises a lithium salt such as LiPF₆ and the like, and an organic solvent. The organic solvent is required to have low reactivity with lithium, minimized internal resistance for smoothly moving lithium ions, thermal stability within a broad temperature range, high compatibility with a negative active material, and a high dielectric constant so as to dissolve a large amount of the lithium salt. Examples of usual organic solvent may mainly include cyclic carbonates such as propylene carbonate (PC), ethylene carbonate (EC), and the like; or linear carbonates such as dimethylcarbonate (DMC), diethyl carbonate (DEC), and the like. It can also include additionally, a hydrocarbon-based solvent such as 1,2-dimethoxyethane, diethoxyethane, and the like.

PC among the organic solvents has a low melting point of about -49°C and thus, excellent low temperature characteristic. PC also has good compatibility with amorphous carbon-based negative active material and a high dielectric constant so that it may dissolve a large amount of inorganic lithium salt. However, PC has the drawback of a high viscosity. PC is usually inserted between carbon layers of a negative electrode during the charge when it is used with a crystalline carbon-based negative active material such as graphite. This can produce decomposition and thus, production of propylene gas and lithium carbonate, decrease of capacity, and increase of irreversible capacity. This irreversible capacity may be primarily caused by the structural characteristics of the carbon. It may vary depending on the degree of reduction of the electrolyte solution. The electrolyte solution is reduced on the side where the carbon contacts with lithium and on the degree that a protective layer of an electrolyte solution is formed on the surface of the carbon. On another hand, EC does not react with a graphite-based negative active material and may be easily applied to a battery using crystalline carbon as a negative electrode. EC has also a high dielectric constant and thus, may dissolve a large amount of a lithium salt. However, EC has a high viscosity and a high melting point (about 36°C) and thus, may not secure a low temperature performance.

In addition, linear carbonates such as DMC, DEC, and the like have low viscosity and are easily intercalated among negative active materials. They may decrease the irreversible capacity of the battery and they also have a small reactivity with lithium. However they have a low dielectric rate and thus, they may not dissolve a large amount of a lithium salt. Particularly, DMC has a high electric conductivity and thus, may be applied to a battery with a high current and a high voltage. However DMC has a high melting point (about 4.6°C) and thus, bad low temperature characteristic. In addition, the organic solvents such as dimethylformamide, acetonitrile, and the like have a high dielectric constant but they also have a high reactivity with lithium. Accordingly, they may not be substantially used.

A method of adding specific different ratios of at least one organic solvent to an electrolyte has been suggested in order to complement drawback of each electrolyte solvent. For example, it was suggested to replace DEC having good low temperature characteristic into a mixture of EC/DEC. However, there is still has a problem of low temperature characteristic, and of low temperature of decomposing an active material. This hardly secures safety.

US 2011/027663 discloses a non-aqueous electrolyte battery in which a non-aqueous electrolyte contains a chain carbonate and/or a chain carboxylate as a main solvent, and an additive which can be tris (trimethylsilyl)borate (TMSB). Composition L3 in Example 2 (from page 8 to page 11, in particular Table 2 on page 11) describes an electrolyte solution comprising 1.2M LiPF6, methyl acetate (MA), and 1 wt.% of TMSB. This composition was tested in a battery which test results are given in Table 2.

EP 2498329 discloses a non-aqueous electrolyte for a rechargeable lithium battery comprising a lithium salt, a non-aqueous organic solvent including more than 50 wt.% of an ester-based solvent (which is a solvent having a low melting point and which can be at least one of an alkyl acetate, an alkyl propionate and a cyclic ester), a first additive: LiF2OB and a second additive which can be tris(trialkylsilyl)borate (among a list of three additives, the preferred and exemplified one being tris(trialkylsilyl)phosphate).

### SUMMARY

The invention provides a non-aqueous electrolyte for a rechargeable lithium battery according to claim 1 that may improve discharge characteristic of a rechargeable lithium battery at a low temperature and increase safety, reliability, and cycle-life characteristic of the rechargeable lithium battery.

The invention also provides a rechargeable lithium battery according to claim 7 including the non-aqueous electrolyte.

According to the invention, the non-aqueous electrolyte for a rechargeable lithium battery includes a lithium salt; a non-aqueous organic solvent; and tris(trialkylsilyl) borate as an additive. The non-aqueous organic solvent includes a solvent having a low melting point, generally of less than or equal to (about) -50°C, and a ionic conductivity of greater than or equal to (about) 6mS/cm at 25°C.

The solvent having a low melting point is selected from alkylacetate, alkylpropionate, and a mixture thereof.

The solvent having a low melting point may be selected from methylacetate, ethylacetate, propylacetate, butylacetate, dimethylacetate, methylpropionate, ethylpropionate, propylpropionate, butylpropionate, and a mixture thereof.

The solvent having a low melting point is included in an amount of (about) 10 wt% to (about) 50 wt%, based on the total weight of the non-aqueous organic solvent.

The tris(trialkylsilyl) borate may be tris(trimethylsilyl) borate.

The tris(trialkylsilyl) borate is included in an amount of (about) 0.1 wt% to (about) 5 wt% based on the total weight of the non-aqueous electrolyte.

The invention also provides a rechargeable lithium battery including the non-aqueous electrolyte.

Other embodiments are described in the detailed description.

The non-aqueous electrolyte for a rechargeable lithium battery according to the invention may improve advantageously discharge characteristics of a rechargeable lithium battery at a low temperature and increase safety, reliability, and cycle-life characteristic of the rechargeable lithium battery.

### BRIEF DESCRIPTION OF THE DRAWINGS

FIG. 1 is a schematic view showing a rechargeable lithium battery according to the invention.
FIG. 2 is a graph showing the ion conductivity, at 0°C and at 25°C, of various solvents (MA, EA, PA, MP, EP, PP or BP) having a low melting point once they are added to a mixture of EC/EMC/DEC, of 1M LiPF₆.
FIG. 3 is a graph showing discharge capacity of the rechargeable lithium battery cells according to Example 3 and Comparative Examples 2 and 3 at -20°C.
FIG. 4 is a graph showing discharge capacity of the rechargeable lithium battery cells according to Example 3 and Comparative Examples 2 and 3 at -30°C.

### DETAILED DESCRIPTION OF THE PREFERRED EMBODIMENT

Example embodiments of this disclosure will hereinafter be described in detail. However, these embodiments are only examples, and this disclosure is not limited thereto.

As used herein, when a specific definition is not otherwise provided, the term "alkyl group" may refer to a C₁ to C₇ alkyl group, and for example, methyl, ethyl, propyl, isopropyl, pentyl, hexyl, heptyl, and the like.

Recently, a rechargeable lithium battery has been used in various climate surroundings. The rechargeable lithium battery requires discharge characteristic at an extremely low temperature. However, the rechargeable lithium battery may have an electrolyte frozen at a temperature of less than or equal to (about) -20°C or has sharply deteriorated discharge voltage due to increased resistance and resultantly, may stop operation of a digital camera or a mobile phone.

This is why the invention provides a non-aqueous electrolyte comprising the combination of a lithium salt, a non-aqueous organic solvent and tris(trialkylsilyl) borate, the non-aqueous organic solvent including a solvent having a lower melting point and higher ionic conductivity than a conventional carbonate-based solvent. This allows preventing a battery comprising this electrolyte from being frozen at an extremely low temperature and this also allows an increase of the discharge capacity of the battery at an extremely low temperature (due to the high ionic conductivity). In addition, the non-aqueous electrolyte includes tris(trialkylsilyl) borate having excellent ionic conductivity and forms a stable layer on the surface of positive and negative active materials. This may suppress internal resistance of the battery and prevent initial discharge voltage deterioration during the low temperature discharge. This also leads to the prevention of cycle-life deterioration caused by the mere presence of a solvent having a low melting point and thus, improve long-term cycle-life characteristic.

In other words, the non-aqueous electrolyte for a rechargeable lithium battery according to the invention includes a lithium salt; a non-aqueous organic solvent; and tris(trialkylsilyl) borate as an additive. The non-aqueous organic solvent may include a solvent having a low melting point of less than or equal to (about) -50°C and a ionic conductivity of greater than or equal to (about) 6mS/cm at (about) 25°C. "About 1" means according to the invention "equal to 1" or "around 1" (1 included).

Hereinafter, each component is described in detail.

### Lithium salt

The lithium salt is usually to be dissolved in the non-aqueous organic solvent. It is the source of lithium ions in the rechargeable lithium battery. It basically operates the rechargeable lithium battery. It generally improves lithium ion transfer between positive and negative electrodes. The lithium salt includes at least one element chosen from LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers), LiCl, LiI, LiB(C₂O₄)₂ (lithium bis(oxalato) borate, LiBOB), or a mixture thereof. This element is used as a supporting electrolytic salt.

The lithium salt may be used at a concentration of (about) 0.1M to (about) 2.0M. When the lithium salt is included within the above concentration range it is believed that it improves electrolyte performance and lithium ion mobility due to optimal electrolyte conductivity and viscosity.

### Non-aqueous organic solvent

The non-aqueous organic solvent usually plays a role of transmitting ions taking part in the electrochemical reaction of the battery.

According to the invention, the non-aqueous organic solvent includes a solvent having a low melting point of less than or equal to (about) -50°C and an ionic conductivity of greater than or equal to (about) 6mS/cm at (about) 25°C. This solvent having a low melting point may have a melting point from (about) -120°C to (about) -50°C, and an ionic conductivity from (about) 6mS/cm to (about) 11mS/cm at (about) 25°C. When the solvent has a melting point and ionic conductivity within the above ranges, it is believed that the non-aqueous electrolyte may not be frozen at a low temperature and may improve conductivity of lithium ions. Accordingly, when used in the rechargeable lithium battery, the electrolyte may advantageously improve its discharge capacity at a low temperature.

The solvent having a low melting point includes, preferably consists of ethylacetate, ethylpropionate, or a mixture thereof. In the alkylacetate and the alkylpropionate, the alkyl is a C₁ to C₁₅ alkyl.

The solvent having a low melting point is included in an amount from (about) 10 wt% to (about) 50 wt% based on the total weight of the non-aqueous organic solvent. When the solvent having a low melting point is included within the range, it is believed that the low temperature characteristic of the battery is improved.

The non-aqueous organic solvent of the invention may further include a conventional non-aqueous organic solvent such as a carbonate-based, ester-based, ether-based, ketone-based, alcohol-based, non-protonic solvent, or any compound which is conventionally used as a non-aqueous organic solvent for a rechargeable lithium battery.

The carbonate-based solvent may include, preferably consist of, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like, and any mixture thereof. The ester-based solvent may include, preferably consist of, γ-butyrolactone, decanolide, valerolactone, mevalonolactone, caprolactone, and the like, and any mixture thereof. The ether-based solvent may include, preferably consist of, dibutyl ether, tetraglyme, diglyme, dimethoxyethane, 2-methyltetrahydrofuran, tetrahydrofuran and the like, and any mixture thereof. The ketone-based solvent may include, preferably consist of, cyclohexanone, and the like, and any mixture thereof. The alcohol-based solvent may include, preferably consist in, ethanol, isopropyl alcohol, and the like and any mixture thereof. The aprotic solvent may include, preferably consist in, nitrile such as R-CN (wherein R is a C₂ to C₂₀ linear, branched, or cyclic hydrocarbon group, and may include a double bond, an aromatic ring, or an ether bond), amide such as dimethylformamide, dimethylacetamide, dioxolanes such as 1,3-dioxolane, sulfolanes, and the like, and any mixture thereof.

The conventional non-aqueous organic solvent may be used alone or in a mixture. When the organic solvent is used in a mixture, its mixture ratio may be adjusted in accordance with the desirable performance of the battery, as routine for the skilled person.

The carbonate-based solvent may include a mixture of a cyclic carbonate and a chain carbonate. The cyclic carbonate and the chain carbonate are usually mixed together in a volume ratio of (about) 1 : 1 to (about) 1 : 9. It is believed that this enhances the performance of the electrolyte.

In addition, the conventional non-aqueous organic solvent may be prepared by further adding an aromatic hydrocarbon-based solvent to a carbonate-based solvent. The carbonate-based solvent and the aromatic hydrocarbon-based solvent are usually mixed together in a volume ratio of (about) 1 : 1 to (about) 30 : 1.

The aromatic hydrocarbon-based solvent may be an aromatic hydrocarbon-based compound represented by the following Chemical Formula 1:

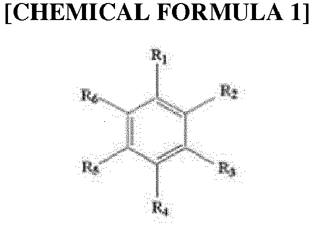

In Chemical Formula 1, R₁ to R₆ are each one independently selected from hydrogen, a halogen, a C₁ to C₁₀ alkyl group, a C₁ to C₁₀ haloalkyl group, and a combination thereof.

The aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and a mixture thereof.

The non-aqueous organic electrolyte may further include vinylene carbonate, an ethylene carbonate-based compound represented by the following Chemical Formula 2, or a combination thereof. It is believed that this improves cycle-life.

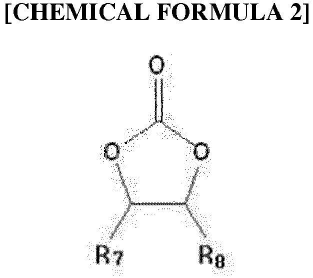

In Chemical Formula 2, R₇ and R₈ are each one independently hydrogen, a halogen, a cyano group (CN), a nitro group (NO₂), or a C₁ to C₅ fluoroalkyl group, provided that at least one of R₇ and R₈ is a halogen, a cyano group (CN), a nitro group (NO₂), or a C₁ to C₅ fluoroalkyl group.

Examples of an ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The vinylene carbonate or the ethylene carbonate-based compound amount may be adjusted within an appropriate range so as to improve the cycle life as accessible to the skilled person.

### Additive

The non-aqueous electrolyte includes tris(trialkylsilyl) borate as an additive. It is believed that this additive increases ionic conductivity.

The alkyl in the tris(trialkylsilyl) borate may be a C₁ to C₇ alkyl; for example, the tris(trialkylsilyl) borate is tris(trimethylsilyl) borate and the like.

The tris(trialkylsilyl) borate is included in an amount of (about) 0.1 wt% to (about) 5 wt%, preferably of (about) 0.1 wt% to (about) 3 wt%, based on the total weight of the non-aqueous electrolyte. When the tris(trialkylsilyl) borate is included within this range, it is believed that the non-aqueous electrolyte has excellent ionic conductivity.

The non-aqueous organic electrolyte having the aforementioned structure may improve discharge characteristic of the rechargeable lithium battery at a low temperature and increase safety, reliability, and cycle-life characteristic of the rechargeable lithium battery.

The invention also encompasses a rechargeable lithium battery including the non-aqueous electrolyte of the invention.

Rechargeable lithium batteries may be classified as lithium ion batteries, lithium ion polymer batteries, and lithium polymer batteries. This depends on the presence of a separator and on the kind of electrolyte used in the battery. The rechargeable lithium batteries may have a variety of shapes and sizes. They can be cylindrical, prismatic, coin-type batteries, or thin film batteries. They can also be rather bulky in size. The structure and the manufacturing method of these batteries are well known from the skilled person in the related field and will not be described in detail. In any case, the rechargeable lithium batteries according to the invention include a battery cell, at least one positive electrode, at least one negative electrode and at least one separator, as well as the electrolyte according to the invention.

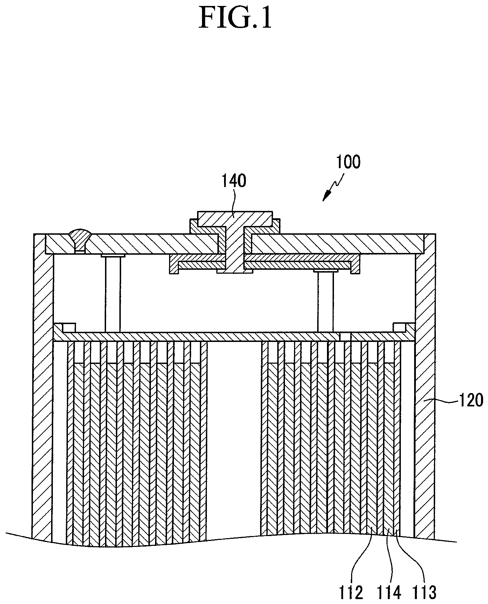

FIG. 1 is an exploded perspective view showing a rechargeable lithium battery in accordance with the invention. Referring to FIG. 1, the rechargeable lithium battery 100 is formed with a cylindrical shape and includes a negative electrode 112, a positive electrode 114, a separator 113 disposed between the positive electrode 114 and the negative electrode 112, in an electrolyte (not shown) impregnated in the negative electrode 112, the positive electrode 114, and in the separator 113, a battery case 120, and a sealing member 140 sealing the battery case 120. The rechargeable lithium battery 100 is fabricated by sequentially stacking a negative electrode 112, the separator 113, a positive electrode 114, and the separator 113, spiral-winding them, and housing the wound product in the battery case 120.

The negative electrode 112 includes a current collector and a negative active material layer formed on the current collector, and the negative active material layer includes the negative active material.

The negative active material generally includes a material that reversibly intercalates/deintercalates lithium ions, lithium metal, lithium metal alloy, and a material being capable of doping and dedoping lithium, or a transition metal oxide.

The material that reversibly intercalates/deintercalates lithium ions includes carbon material. The carbon material may be any generally-used carbon-based negative active material in a lithium ion rechargeable battery. Examples of the carbon material include crystalline carbon, amorphous carbon, and a combination thereof. The crystalline carbon may be non-shaped, sheet, flake, spherical, fiber-shaped natural graphite or artificial graphite and the like. The amorphous carbon may be soft carbon, hard carbon, mesophase pitch carbonized product, fired coke, and the like.

The lithium metal alloy usually includes lithium and a metal selected from Na, K, Rb, Cs, Fr, Be, Mg, Ca, Sr, Si, Sb, Pb, In, Zn, Ba, Ra, Ge, Al, and Sn, and a combination thereof.

Examples of the material being capable of doping and dedoping lithium include Si, SiOₓ (0 < x < 2), a Si-X₁ alloy (wherein X₁ is an element selected from the group consisting of an alkali metal, an alkaline-earth metal, Group 13 to 16 elements, a transition element, a rare earth element, and a combination thereof, and not Si), Sn, SnO₂, Sn-X₂ alloy (wherein X₂ is an element selected from the group consisting of an alkali metal, an alkaline-earth metal, Group 13 to 16 elements, a transition element, a rare earth element, and combinations thereof and is not Sn), and the like. X₁ and X₂ may be independently Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

Examples of the transition metal oxide include vanadium oxide, lithium vanadium oxide, and the like.

The negative active material layer may further include a binder and optionally a conductive material.

The binder generally improves binding properties of the negative active material particles to one another and to a current collector. Examples of the binder include polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as the conductive material, unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may be a copper foil, a nickel foil, a stainless steel foil, a titanium foil, a nickel foam, a copper foam, a polymer substrate coated with a conductive metal, or combinations thereof.

The positive electrode 114 includes a current collector and a positive active material layer disposed on the current collector.

The positive active material includes lithiated intercalation compounds that reversibly intercalate and deintercalate lithium ions. The positive active material may include a composite oxide including at least one selected from cobalt, manganese, and nickel, as well as lithium. In particular, the following compounds may be used: LiₐA_{1-b}R_{b}D₂ (0.90 ≤ a ≤ 1.8 and 0 ≤ b ≤ 0.5); LiₐE_{1-b}R_{b}O_{2-c}D_{c} (0.90 ≤ a ≤ 1.8, 0 ≤ b ≤ 0.5 and 0 ≤ c ≤ 0.05); LiE_{2-b}R_{b}O_{4-c}D_{c} (0 ≤ b ≤ 0.5, 0 ≤ c ≤ 0.05); LiₐNi_{1-b-c}Co_{b}R_{c}D_{α} (0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (0.90 ≤ a ≤ 1.8, 0 ≤ b ≤ 0.5, 0 ≤ c ≤ 0.05 and 0 < α < 2); LiₐNi_{1-b-c}Co_{b}R_{c}O₂₋ₐ ( 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (0.90 ≤ a ≤ 1.8, 0 ≤ b ≤ 0.5, 0 ≤ c ≤ 0.05 and 0 < α < 2); Li.Ni_{1-b-c}Mn_{b}R_{c}O_{2-α}Z₂ (0.90 ≤ a ≤ 1.8, 0 ≤ b ≤ 0.5, 0 ≤ c ≤ 0.05 and 0 < α < 2); LiₐNi_{b}E_{c}G_{d}O₂ (0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂ (0.90 ≤ a ≤ 1.8 and 0.001 ≤ b ≤ 0.1); LiₐCoG_{b}O₂ (0.90 ≤ a ≤ 1.8 and 0.001 ≤ b ≤ 0.1); LiₐMnG_{b}O₂ (0.90 ≤ a ≤ 1.8 and 0.001 ≤ b ≤ 0.1); LiₐMn₂G_{b}O₄ (0.90 ≤ a ≤ 1.8 and 0.001 ≤ b ≤ 0.1.); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The lithiated intercalation compound may have a coating layer on the surface or be mixed with a compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds comprised in the coating layer can be amorphous or crystalline. The coating element may include Mg, Al, Co, K, Na, Ca, Si, Ti, V, Sn, Ge, Ga, B, As, Zr, or a mixture thereof. The coating layer can be formed by a method having no negative influence on properties of the positive active material, by including these elements in the compound. For example, the method may include any coating method such as spray coating, dipping, and the like, but is not illustrated in more detail, since it is well-known to those who work in the related field.

The positive active material layer may include a binder and a conductive material.

The binder usually improves binding properties of the positive active material particles to one another and to a current collector. Examples of the binder may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a positive electrode. Any electrically conductive material may be used as the conductive material, unless it causes a chemical change. For example, it may include natural graphite, artificial graphite, carbon black, acetylene black, ketjen black, carbon fiber, metal powder or metal fiber such as copper, nickel, aluminum, silver or the like, or a mixture thereof, or one or at least one kind of mixture of conductive material such as polyphenylene derivative or the like.

The current collector may be aluminum (Al), but is not limited thereto.

Each one of the negative electrode 112 and positive electrode 114 may be manufactured in a method of mixing the active material, a conductive material, and a binder to form an active material composition and coating the composition on a current collector, respectively. The electrode-manufacturing method is well known and thus, is not described in detail in the present specification. The solvent may include N-methylpyrrolidone and the like, but is not limited thereto.

The electrolyte is the same as described in above.

According to the kind of rechargeable lithium battery, a separator 113 may be interposed between the positive electrode 114 and the negative electrode 112. The separator 113 may include polyethylene, polypropylene, polyvinylidene fluoride, or a multilayer of two or more layers thereof. It may also include a mixed multilayer such as a polyethylene/polypropylene 2-layered separator, a polyethylene/polypropylene/polyethylene 3-layered separator, a polypropylene/polyethylene/polypropylene 3-layered separator, or the like.

Hereinafter, the embodiments are illustrated in more detail with reference to examples. However, the following are example embodiments and are not limiting.

### Example 1

A positive active material slurry was prepared by mixing a positive active material prepared by mixing LiCoO₂ and Li(Ni_{1/3}Co_{1/3}Mn_{1/3})O₂ in a weight ratio of 7:3, polyvinylidene fluoride (PVDF) as a binder, and ketjen black as a conductive material in a weight ratio of 92:4:4, and further adding N-methyl-2-pyrrolidone thereto. The positive active material slurry was coated on a 20µm-thick aluminum film as a current collector, dried in a vacuum oven, and compressed, thus fabricating a positive electrode.

In addition, a negative active material slurry was prepared by mixing crystalline artificial graphite as a negative active material and PVDF as a binder in a weight ratio of 92:8, and dispersing the mixture to N-methyl-2-pyrrolidinone. The negative active material slurry was coated on a 15µm-thick copper film as a current collector, dried in a vacuum oven, and compressed, thus fabricating a negative electrode.

Next, a 25µm-thick porous polyethylene membrane as a separator was interposed between the positive and negative electrodes, thus fabricating an electrode assembly. The electrode assembly was spirally wound, compressed, and housed in a prismatic can. Then, a non-aqueous organic electrolyte was prepared by adding 10 wt% of ethylacetate (EA) and 1wt% of tris(trimethylsilyl) borate (TMSB) to a mixed solvent prepared by mixing ethylenecarbonate (EC) / diethylcarbonate (DEC) (in a volume ratio of 30:60, based on the total weight of the non-aqueous organic solvent) and dissolving 1M LiPF₆ therein. This electrolyte is injected into the can. The can was sealed to fabricate a rechargeable lithium battery cell.

### Examples 2 to 18 and Comparative Examples 1 to 3

A rechargeable lithium battery cell was fabricated according to the same method as in Example 1 except that the non-aqueous electrolyte was prepared by using the amount and composition provided in the following Table 1.

**TABLE 1**

| | **Solvent (volume ratio)** | **Solvent having a low me lting point (wt%)** | **LiPF₆ (M)** | **TMSB (wt%)** |
|---|---|---|---|---|
| Example 1 | EC/DEC = 30:60 | EA 10 | 1.0 | 1 |
| Example 2 | EC/DEC = 30:40 | EA 30 | 1.0 | 1 |
| Example 3 | EC/DEC = 30:20 | EA 50 | 1.0 | 1 |
| Reference example 4 | EC = 30 | EA 70 | 1.0 | 1 |
| Example 5 | EC/DEC = 30:60 | EP 10 | 1.0 | 1 |
| Example 6 | EC/DEC = 30:40 | EP 30 | 1.0 | 1 |
| Example 7 | EC/DEC = 30:20 | EP 50 | 1.0 | 1 |
| Reference example 8 | EC = 30 | EP 70 | 1.0 | 1 |
| Example 9 | EC/DEC = 30:20 | EA 50 | 1.0 | 0.1 |
| Example 10 | EC/DEC = 30:20 | EA 50 | 1.0 | 0.5 |
| Example 11 | EC/DEC = 30:20 | EA 50 | 1.0 | 2 |
| Example 12 | EC/DEC = 30:20 | EA 50 | 1.0 | 3 |
| Example 13 | EC/DEC = 30:20 | MA 50 | 1.0 | 1 |
| Example 14 | EC/DEC = 30:20 | PA 50 | 1.0 | 1 |
| Example 15 | EC/DEC = 30:20 | BA 50 | 1.0 | 1 |
| Example 16 | EC/DEC = 30:20 | MP 50 | 1.0 | 1 |
| Example 17 | EC/DEC = 30:20 | PP 50 | 1.0 | 1 |
| Example 18 | EC/DEC = 30:20 | BP 50 | 1.0 | 1 |
| Comparative Example 1 | EC/DEC/EMC = 30:20:50 | - | 1.0 | - |
| Comparative Example 2 | EC/DEC/EMC=30:20:50 | - | 1.0 | 1 |
| Comparative Example 3 | EC/DEC = 30:20 | EA 50 | 1.0 | - |

In Table 1, EC is ethylenecarbonate, DEC is diethylcarbonate, EMC is ethylmethylcarbonate, EA is ethylacetate, EP is ethyl propionate, MA is methyl acetate, PA is propyl acetate, BA is butyl acetate, BP is butyl propionate, PP is propyl propionate, and TMSB is tris(trimethylsilyl) borate.

Table 2 shows the melting points of the solvents according to the Examples and Comparative Examples.

**TABLE 2**

| **Solvent** | **Melting point (°C)** |
|---|---|
| EC(ethylene carbonate) | 36 |
| PC(propylene carbonate) | -48 |
| DMC(dimethyl carbonate) | 3 |
| EMC(ethyl methyl carbonate) | -15 |
| DEC(diethyl carbonate) | -43 |
| EA(ethyl acetate) | -84 |
| MA(methyl acetate) | -94 |
| PA(propyl acetate) | -93 |
| BA(butyl acetate) | -78 |
| EP(ethyl propionate) | -73 |
| MP(methyl propionate) | -87 |
| PP(propyl propionate) | -76 |
| BP(butyl propionate) | -74 |

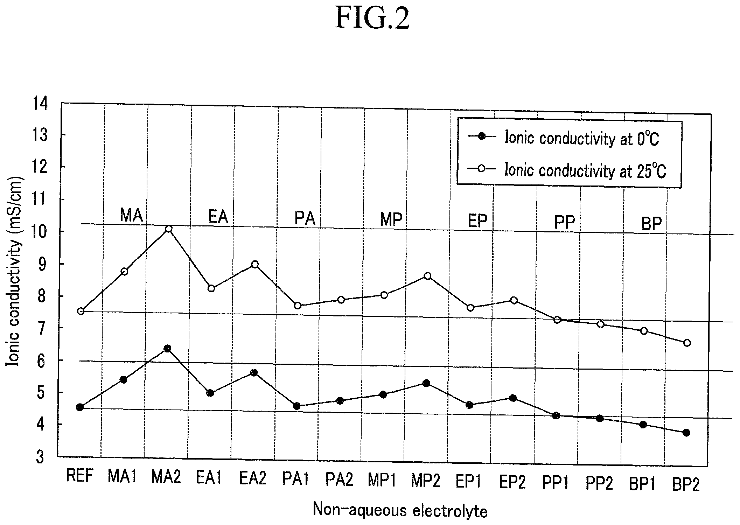

FIG. 2 shows the ion conductivity (mS/cm) as measured at 0°C and at 25°C, of various solvents. They were measured by adding various solvents having a low melting point in an amount provided in the following Table 3 (based on the total weight of the non-aqueous organic solvent) to a mixed solvent of EC/EMC/DEC (a mixing volume ratio=3:5:2) and any of MA, EA, PA, MP, EP, PP, BP and further including 1M LiPF₆.

**TABLE 3**

| **Electrolyte** | **LiPF₆** | **EC/EMC/DEC** | **Solvent having a, low melting point (wt%)** |
|---|---|---|---|
| REF | 1M | 3:5:2 | - |
| MA1 | 1M | 3:5:2 | 10 |
| MA2 | 1M | 3:5:2 | 20 |
| EA1 | 1M | 3:5:2 | 10 |
| EA2 | 1M | 3:5:2 | 20 |
| PA1 | 1M | 3:5:2 | 10 |
| PA2 | 1M | 3:5:2 | 20 |
| MP1 | 1M | 3:5:2 | 10 |
| MP2 | 1M | 3:5:2 | 20 |
| EP1 | 1M | 3:5:2 | 10 |
| EP2 | 1M | 3:5:2 | 20 |
| PP1 | 1M | 3:5:2 | 10 |
| PP2 | 1M | 3:5:2 | 20 |
| BP1 | 1M | 3:5:2 | 10 |
| BP2 | 1M | 3:5:2 | 20 |

### Experimental Example

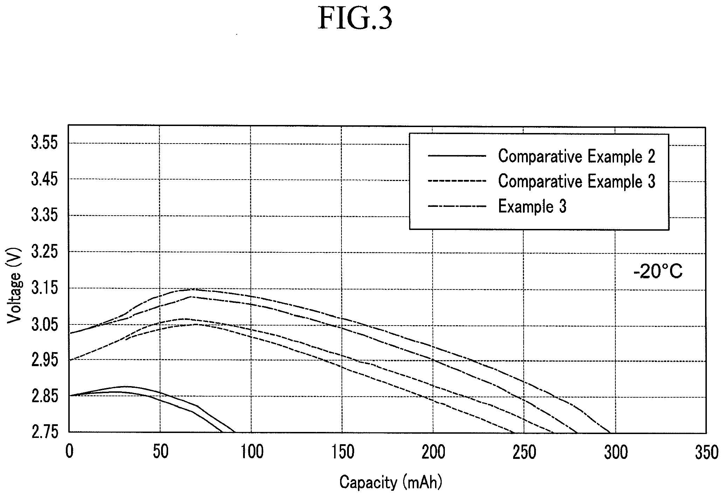

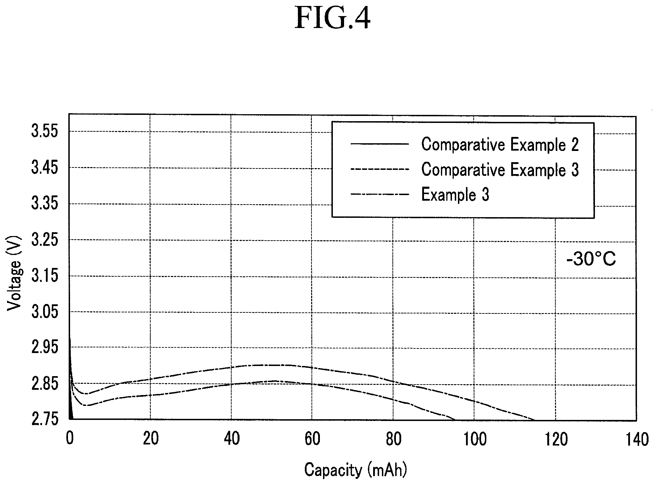

The rechargeable lithium battery cells according to the Examples and Comparative Examples were evaluated regarding their capacity at different low temperatures (of -20°C and -30°C) and their cycle-life characteristic at room temperature after 500 cycles. The results are provided in the following Table 4. In addition, the rechargeable lithium battery cells comprising different electrolytes (according to Comparative Examples 2 and 3 and Example 3) were measured regarding their capacity at low temperatures (of -20 °C and -30 °C). The results are provided in FIGS 3 and 4. The low temperature capacity was measured by activating the rechargeable lithium battery cells according to the Examples and Comparative Examples through formation charge and discharge (formation charge: 0.5C/4.35V, 0.05C cut-off; formation discharge: 1C/2.75V, 27min), charging them under a CC-CV condition of a current of 400mA and a charge voltage of 4.35V voltage, being allowed to stand and frozen at -20°C and -30°C chamber respectively for 2 hours, and being discharged at 1C down to 2.75V.

In addition, the cycle-life characteristic was evaluated as a ratio of discharge capacity after 500 cycles relative to initial discharge capacity by charging the rechargeable lithium battery cells under a CC-CV condition of 1C and a charge voltage of 4.35V for 2 hours and 30 minutes and discharging them with 1C and a cut-off of 3.2V as one cycle and repeating the cycle 500 times at room temperature (24 to 25°C).

**TABLE 4**

| | **-20°C discharge capacity (%)** | **-30 °C discharge capacity (%)** | **Cycle-life characteristic after 500 cycles at room, temperature (%)** |
|---|---|---|---|
| Example 1 | 42 | 7 | 88 |
| Example 2 | 47 | 9 | 88 |
| Example 3 | 50 | 15 | 87 |
| Reference example 4 | 53 | 14 | 82 |
| Example 5 | 38 | 5 | 89 |
| Example 6 | 40 | 7 | 87 |
| Example 7 | 45 | 12 | 85 |
| Reference example 8 | 47 | 15 | 85 |
| Example 9 | 45 | 2 | 83 |
| Example 10 | 43 | 8 | 84 |
| Example 11 | 48 | 17 | 84 |
| Example 12 | 51 | 15 | 81 |
| Example 13 | 45 | 10 | 85 |
| Example 14 | 44 | 10 | 82 |
| Example 15 | 44 | 7 | 80 |
| Example 16 | 43 | 7 | 83 |
| Example 17 | 40 | 5 | 80 |
| Example 18 | 41 | 5 | 80 |
| Comparative Example 1 | 12 | 0 | 88 |
| Comparative Example 2 | 15 | 0 | 89 |
| Comparative Example 3 | 40 | 0 | 80 |

As shown in Table 4 and FIGS. 3 and 4, the rechargeable lithium battery cells according to the Examples 1 to 3, 5 to 7 and 9 to 18 according to the invention had excellent discharge capacity at a low temperature and simultaneously, excellent cycle-life characteristic at room temperature. This was not the case for Comparative Examples 1 to 3.

While these embodiments have been described in connection with what is presently considered to be practical example embodiments, it is to be understood that the present embodiments are not limited to the disclosed embodiments, but, on the contrary, is intended to cover various modifications and equivalent arrangements included within the scope of the appended claims.

## Claims

1. A non-aqueous electrolyte for a rechargeable lithium battery including a negative active material which includes a carbon material, wherein said electrolyte consists of:
a lithium salt including at least one element chosen from LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂)
wherein, x and y are natural numbers, LiCl, LiI, LiB(C₂O₄)₂, or a mixture thereof;
a non-aqueous organic solvent; and
tris(trialkylsilyl) borate,
wherein the non-aqueous organic solvent includes a solvent having a low melting point of less than or equal to -50°C and an ionic conductivity of greater than or equal to 6mS/cm at 25°C,
wherein the solvent having a low melting point is selected from an alkylacetate, an alkylpropionate, and a mixture thereof,
wherein the non-aqueous organic solvent further includes a carbonate-based, ester-based, ether-based, ketone-based, alcohol-based, non-protonic solvent or a mixture thereof, and
wherein the tris(trialkylsilyl) borate is included in an amount of 0.1 wt% to 5 wt%, based on the total weight of the non-aqueous electrolyte
**characterized in that** the solvent having a low melting point is included in an amount of 10 wt% to 50 wt%, based on the total weight of the non-aqueous organic solvent.

2. The non-aqueous electrolyte according to claim 1, wherein the solvent having a low melting point is selected from methylacetate, ethylacetate, propylacetate, butylacetate, dimethylacetate, methylpropionate, ethylpropionate, propylpropionate, butylpropionate, and a mixture thereof, preferably selected from ethylacetate, ethylpropionate, and a mixture thereof.

3. The non-aqueous electrolyte according to claim 1, wherein the solvent having a low melting point is selected from methylacetate, ethylacetate, propylacetate, butylacetate, dimethylacetate, and a mixture thereof.

4. The non-aqueous electrolyte according to claim 1, wherein the solvent having a low melting point is selected from methylpropionate, ethylpropionate, propylpropionate, butylpropionate, and a mixture thereof.

5. The non-aqueous electrolyte according to any one of claims 1 to 4, wherein the tris(trialkylsilyl) borate is tris(trimethylsilyl) borate.

6. The non-aqueous electrolyte according to any one of claims 1 to 5, wherein the tris(trialkylsilyl) borate is included in an amount of 0.1 wt% to 3 wt%, based on the total weight of the non-aqueous electrolyte.

7. A rechargeable lithium battery (100) comprising a battery cell, at least one positive electrode (114), at least one separator (113), at least one negative electrode (112) including a negative active material which includes a carbon material, and at least one non-aqueous electrolyte according to any one of claims 1 to 6.

## Patentansprüche

1. Nichtwässriger Elektrolyt für eine wiederaufladbare Lithiumbatterie, die ein Negativ-Aktivmaterial enthält, das ein Kohlenstoffmaterial umfasst, wobei der Elektrolyt besteht aus:
einem Lithiumsalz, umfassend mindestens eine Komponente, ausgewählt aus LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂), wobei x und y natürliche Zahlen sind, LiCl, LiI, LiB(C₂O₄)₂, oder einem Gemisch davon;
einem nichtwässrigen organischen Lösungsmittel; und
Tris(trialkylsilyl)borat,
wobei das nichtwässrige organische Lösungsmittel ein Lösungsmittel mit einem niedrigen Schmelzpunkt von kleiner als oder gleich -50 °C und einer Ionenleitfähigkeit von größer als oder gleich 6 mS/cm bei 25 °C umfasst,
wobei das Lösungsmittel mit einem niedrigen Schmelzpunkt ausgewählt ist aus einem Alkylacetat, einem Alkylpropionat, und einem Gemisch davon,
wobei das nichtwässrige organische Lösungsmittel weiterhin ein Lösungsmittel auf Carbonatbasis, ein Lösungsmittel auf Esterbasis, ein Lösungsmittel auf Etherbasis, ein Lösungsmittel auf Ketonbasis, ein Lösungsmittel auf Alkoholbasis, ein nichtprotisches Lösungsmittel oder ein Gemisch davon umfasst, und
wobei das Tris(trialkylsilyl)borat in einer Menge von 0,1 Gew.-% bis 5 Gew.-%, bezogen auf das Gesamtgewicht des nichtwässrigen Elektrolyten, enthalten ist,
**dadurch gekennzeichnet, dass** das Lösungsmittel mit einem niedrigen Schmelzpunkt in einer Menge von 10 Gew.-% bis 50 Gew.-%, bezogen auf das Gesamtgewicht des nichtwässrigen organischen Lösungsmittels, enthalten ist.

2. Nichtwässriger Elektrolyt nach Anspruch 1, wobei das Lösungsmittel mit einem niedrigen Schmelzpunkt ausgewählt ist aus Methylacetat, Ethylacetat, Propylacetat, Butylacetat, Dimethylacetat, Methylpropionat, Ethylpropionat, Propylpropionat, Butylpropionat, und einem Gemisch davon, vorzugsweise ausgewählt ist aus Ethylacetat, Ethylpropionat, und einem Gemisch davon.

3. Nichtwässriger Elektrolyt nach Anspruch 1, wobei das Lösungsmittel mit einem niedrigen Schmelzpunkt ausgewählt ist aus Methylacetat, Ethylacetat, Propylacetat, Butylacetat, Dimethylacetat, und einem Gemisch davon.

4. Nichtwässriger Elektrolyt nach Anspruch 1, wobei das Lösungsmittel mit einem niedrigen Schmelzpunkt ausgewählt ist aus Methylpropionat, Ethylpropionat, Propylpropionat, Butylpropionat, und einem Gemisch davon.

5. Nichtwässriger Elektrolyt nach einem der Ansprüche 1 bis 4, wobei das Tris(trialkylsilyl)borat Tris(trimethylsilyl)borat ist.

6. Nichtwässriger Elektrolyt nach einem der Ansprüche 1 bis 5, wobei das Tris(trialkylsilyl)borat in einer Menge von 0,1 Gew.-% bis 3 Gew.-%, bezogen auf das Gesamtgewicht des nichtwässrigen Elektrolyten, enthalten ist.

7. Wiederaufladbare Lithiumbatterie (100), umfassend eine Batteriezelle, mindestens eine positive Elektrode (114), mindestens einen Separator (113), mindestens eine negative Elektrode (112) mit einem Negativ-Aktivmaterial, das ein Kohlenstoffmaterial umfasst, und mindestens einen nichtwässrigen Elektrolyten nach einem der Ansprüche 1 bis 6.

## Revendications

1. Électrolyte non aqueux pour une batterie au lithium rechargeable comprenant une matière active négative qui comprend une matière carbonée, ledit électrolyte consistant en :
un sel de lithium comprenant au moins un élément choisi parmi LiPF₆, LiBF₄, LiSbF₆, LiAsF₆, LiC₄F₉SO₃, LiClO₄, LiAlO₂, LiAlCl₄, LiN (CₓF₂ₓ₊₁SO₂) (C_{y}F_{2y+1}SO₂) dans lequel x et y sont des nombres entiers naturels, LiCl, LiI, LiB(C₂O₄)₂, ou un mélange de ceux-ci ;
un solvant organique non aqueux ; et
un tris(trialkylsilyl)borate,
dans lequel le solvant organique non aqueux comprend un solvant ayant un bas point de fusion inférieur ou égal à -50°C et une conductivité ionique supérieure ou égale à 6 mS/cm à 25°C,
dans lequel le solvant ayant un bas point de fusion est sélectionné parmi un acétate d'alkyle, un propionate d'alkyle, et un mélange de ceux-ci,
dans lequel le solvant organique non aqueux comprend en outre un solvant à base de carbonate, un solvant à base d'ester, un solvant à base d'éther, un solvant à base de cétone, un solvant à base d'alcool, un solvant non-protonique ou un mélange de ceux-ci, et
dans lequel le tris(trialkylsilyl)borate est inclus selon une quantité de 0,1 % en poids à 5 % en poids, sur la base du poids total de l'électrolyte non aqueux,
**caractérisé en ce que** le solvant ayant un bas point de fusion est inclus selon une quantité de 10 % en poids à 50 % en poids, sur la base du poids total du solvant organique non aqueux.

2. Électrolyte non aqueux selon la revendication 1, dans lequel le solvant ayant un bas point de fusion est sélectionné parmi l'acétate de méthyle, l'acétate d'éthyle, l'acétate de propyle, l'acétate de butyle, l'acétate de diméthyle, le propionate de méthyle, le propionate d'éthyle, le propionate de propyle, le propionate de butyle, et un mélange de ceux-ci, de préférence sélectionné parmi l'acétate d'éthyle, le propionate d'éthyle, et un mélange de ceux-ci.

3. Électrolyte non aqueux selon la revendication 1, dans lequel le solvant ayant un bas point de fusion est sélectionné parmi l'acétate de méthyle, l'acétate d'éthyle, l'acétate de propyle, l'acétate de butyle, l'acétate de diméthyle, et un mélange de ceux-ci.

4. Électrolyte non aqueux selon la revendication 1, dans lequel le solvant ayant un bas point de fusion est sélectionné parmi le propionate de méthyle, le propionate d'éthyle, le propionate de propyle, le propionate de butyle, et un mélange de ceux-ci.

5. Électrolyte non aqueux selon l'une quelconque des revendications 1 à 4, dans lequel le tris(trialkylsilyl)borate est le tris(triméthylsilyl)borate.

6. Électrolyte non aqueux selon l'une quelconque des revendications 1 à 5, dans lequel le tris(trialkylsilyl)borate est inclus selon une quantité de 0,1 % en poids à 3 % en poids, sur la base du poids total de l'électrolyte non aqueux.

7. Batterie au lithium rechargeable (100) comprenant une cellule de batterie, au moins une électrode positive (114), au moins un séparateur (113), au moins une électrode négative (112) comprenant une matière active négative qui comprend une matière carbonée, et au moins un électrolyte non aqueux défini selon l'une quelconque des revendications 1 à 6.
